# EUROPEAN PATENT APPLICATION

(11) **EP 2 341 417 A1**
(43) Date of publication of application: **06.07.2011**
(21) Application number: 09252939.5
(22) Date of filing: 31.12.2009
(51) Int. Cl.: G06F 3/048, G06F 3/01, G06F 1/16

(54) **Device and method of control**

(71) Applicant: Sony Computer Entertainment Europe Limited, London W1F 7LP (GB)
(72) Inventor: The designation of the inventor has not yet been filed
(74) Representative: Turner, James Arthur

(57) **Abstract**

A portable electronic device comprises a tapping detection means, a rhythm recognition means arranged in operation to recognise from a set of two or more rhythms a rhythm associated with a respective sequence of two or more detected taps, a rhythm association means arranged in operation to associate a recognised rhythm with one or more commands of the device, and a control means operable to initiate the associated one or more commands.

## Description

The present invention relates to a device and a method of controlling such a device.

A trend among current portable or pocketable devices such as mobile phones, so-called 'smart-phones', music players, videogames and the like is to become both smaller and to be equipped with more features over time. This may be in the form of so-called 'convergence', where, for example, mobile phones now frequently incorporate still or video cameras, or where media players are also capable of playing some video games. Alternatively or in addition, the set of features provided with a type of device may increase as implementations of existing device features become more complex.

In either case, one consequence is that the user interface of the device itself also becomes more complex to accommodate control of ever more features. A common approach has therefore been to adopt touch-screens, which have the advantage that controls for different functions are simply graphics to be displayed temporarily on the screen, and hence the physical size of the device no longer imposes a limit on the number of controls possible.

However, this solution is not available when the screen is not visible; for example when the device is in a protective sleeve or is being carried in a pocket.

A conventional solution is to provide a remote control (typically integrated into headphone leads) that has a limited set of physical controls for important or common functions. However, as the host devices get ever more complex, such remote controls are suffering from a similar problem of being inadequate in size to offer a sufficiently comprehensive set of controls.

The present invention seeks to address or mitigate this problem.

In a first aspect, a portable electronic device comprises a tapping detection means, a rhythm recognition means arranged in operation to recognise from a set of two or more rhythms a rhythm associated with a respective sequence of two or more detected taps, a rhythm association means arranged in operation to associate a recognised rhythm with one or more commands of the device, and a control means operable to initiate the associated one or more commands.

In another aspect, a method of controlling a portable electronic device comprises the steps of detecting a tap on the device, recognising from a set of two or more rhythms a rhythm generated by a respective sequence of two or more detected taps, associating a recognised tapped rhythm with one or more commands of the device, and initiating the associated one or more commands on the device.

Advantageously, this approach enables a user to control potentially any aspect of a device's function using a simple, discrete mode of input that does not require either a remote control or that the device is removed from the user's pocket to make reference to displayed (or physical) controls.

Further respective aspects and features of the invention are defined in the appended claims.

Embodiments of the present invention will now be described by way of example with reference to the accompanying drawings, in which:
Figures 1A and 1B are schematic diagrams of an entertainment device in accordance with an embodiment of the present invention.
Figure 2 is a schematic diagram of an entertainment device in accordance with an embodiment of the present invention.
Figure 3 is a schematic diagram of an entertainment device in accordance with an embodiment of the present invention.
Figure 4 is a schematic diagram of an entertainment device in use, in accordance with an embodiment of the present invention.
Figure 5 is a flow chart of a method of control in accordance with an embodiment of the present invention.

A device and method of control are disclosed. In the following description, a number of specific details are presented in order to provide a thorough understanding of the embodiments of the present invention. It will be apparent, however, to a person skilled in the art that these specific details need not be employed to practise the present invention. Conversely, specific details known to the person skilled in the art are omitted for the purposes of clarity where appropriate.

In an example embodiment of the present invention, a portable device such as a mobile phone with an mp3 player is being carried by a user in their pocket. The device has a touch screen and/or one or more accelerometers, that enable the device to detect that is has been tapped by the user, for example with the flat of the user's hand though the material of their pocket. In this way, rhythms are input to the device by discretely tapping or patting the device through the user's pocket. Different tapping rhythms represent different commands or macros (sequences of commands) that result in different actions being performed by the device. The actual rhythm sequence can be detected by one or more of a number of known pattern recognition techniques, such as template matching or hidden Markov models. Using the symbol '•' for a tap and '-' for a long pause, then in such a scenario as that described above, a rhythm such as '• • - • •' may be associated with answering a phone call. Meanwhile '• - • - •' might be associated with engaging silent mode or call divert, for example when entering a meeting or cinema. Such rhythmic commands can also be contextually dependent; for example a general 'OK' pattern such as '• • •' may mean 'answer call' or 'play music track' depending on the current state of the device at the time that the user entered the sequence of taps which was recognised as that rhythm. Moreover, new rhythms may be recorded and associated with any command or command sequence that the user can input conventionally. This technique provides the clear advantage of being able to control potentially any aspect of a device's function using a simple, discrete mode of input that does not require either a remote control or that the device is removed from the user's pocket to make reference to displayed (or physical) controls.

In embodiments of the present invention, a device to be controlled in such a manner is referred to as a portable electronic device (PED).

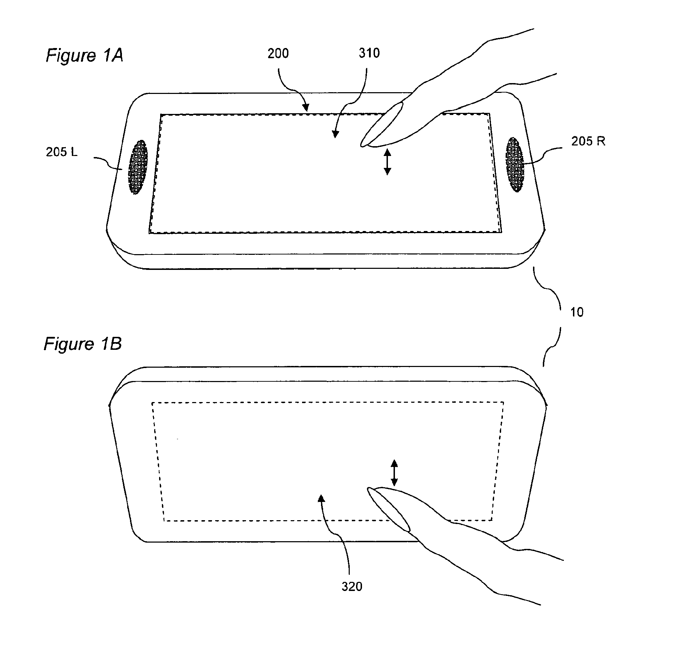

Figures 1A and 1B illustrate an embodiment of a PED 10. Figure 1A shows a notional front or top face of the PED, whilst Figure 1B shows a notional rear or bottom face of the PED. The front and rear faces are substantially parallel to each other.

On the front face, the PED comprises a display 200 and optionally one or more loudspeakers 205L, 205R.

On the rear face, the PED comprises a rear touch sensitive surface 320 (indicated by the dotted lines) having similar dimensions to the display 200. The rear touch sensitive surface is positioned so as to be substantially aligned with the display. That is to say, considered in a direction normal to the plane of the display, the rear touch sensitive surface substantially overlies the display.

Optionally, a transparent front touch sensitive surface 310 (indicated by the dotted lines in Figure 1A) is also provided coincident with the display 200. The front and rear touch sensitive surfaces and the display thus have similar dimensions and placements on their respective faces of the device. The touch sensitive surfaces also have a similar resolution of touch localisation.

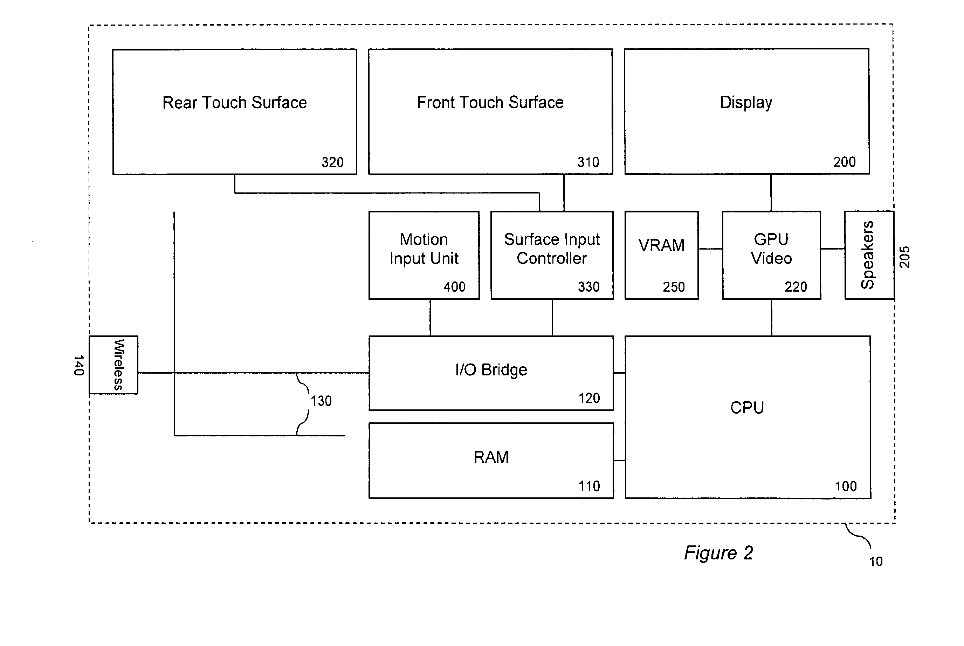

Referring now to Figure 2, an embodiment of the PED comprises a central processor (CPU) 100 coupled to random access memory (RAM) 110, and optionally to a read only memory (not shown). In addition the CPU communicates with a graphics processing unit (GPU) 220. The GPU has access to video RAM (VRAM) 250. The GPU outputs audio to loudspeakers 205L,R (only one shown for clarity) and/or to a headphone jack socket (not shown). The GPU also outputs video information to the display 200. The display is typically a liquid crystal display (LCD) but may be an organic light emitting diode display (OLED) or similar suitable display technology.

In addition, the CPU communicates with an input / output bridge (I/O bridge) 120 that co-ordinates communication with peripheral components both integral to and linkable with the PED. In an embodiment of the PED the I/O bridge communicates with a surface input controller 330, which parses inputs from the rear touch sensitive surface 320 and optionally the transparent front touch sensitive surface 310. The I/O bridge also communicates with a motion input unit 400 comprising one or more micro electromechanical (MEMs) accelerometers and/or gyroscopes, to provide up to six axes of motion input (x, y and z axis lateral movement and roll, pitch and yaw rotational movement). The I/O bridge also communicates with a bus 130, upon which various peripheral devices may be linked, including one or more wireless communication units 140, such as for example WiFi and / or Bluetooth ® communication units.

It will be appreciated that the CPU 100 may be a single core or multi core processor. Similarly, the RAM may be dynamic RAM or may comprise both dynamic RAM and static (e.g. flash) RAM units. Likewise, whilst the GPU typically uses dedicated VRAM, alternatively or in addition it may share common RAM with the CPU. Finally, it will be appreciated that the function of the surface input controller 330 may be performed by the CPU itself.

The rear touch sensitive surface may be a conventional capacitance touchpad or panel such as that found in laptop computers or portable telephones. Such a touchpad typically comprises two layers of parallel conductive lines separated by an insulator and arranged at right angles to one another. A high frequency signal is swept through every respective pairing of lines between the two layers. The measurable current for each pair is then proportional to the capacitance at their point of intersection. When a user's finger is placed at or near that intersection, however, some of the electrical field between layers is shunted to ground, changing the effective capacitance and hence the measured current. Precise localisation of the user's finger can be achieved by measuring changes in capacitance at nearby points of intersection, which will be proportional to their respective distances from the finger. So-called multi-touch operation of the touchpad can be achieved by detecting distinct peaks in capacitance change at separate intersection points on the pad. Meanwhile, movement of a user's finger or fingers can be estimated from successive points of intersection where contact is detected.

A front touch sensitive surface for use with the display operates in a similar manner to the rear touch sensitive surface, but in this instance the conductive lines are typically transparent (as a non limiting example, being formed by a deposition of indium tin oxide), and the insulator between two layers is provided by all or part of the display window (e.g. a glass layer); typically a further transparent protective layer is then provided on top of the upper conductive layer.

It will be appreciated however that any suitable touch sensitive technique may be used for either touch panel.

It will also be appreciated that whilst not shown in the figures for the purposes of clarity, the PED comprises power distribution lines to various components and one or more sources of power, such as an input socket (for example a conventional DC power socket, or alternatively or in addition a USB socket). Such an input socket may also be used to charge one or more batteries (also not shown). Such batteries may be user removable or may be sealed in the device. Other components not shown include, for example, an optional microphone.

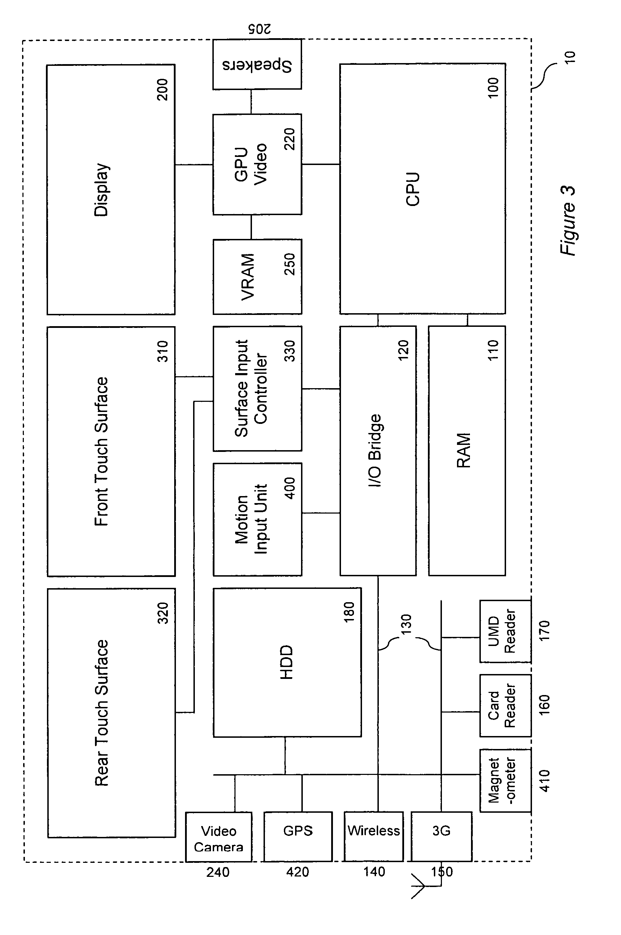

Referring now also to Figure 3, an embodiment of the PED may comprise one or more additional components, either integrated within the device or connectable to it. The additional components include, but are not limited to, the following.
a) A card reader 160 suitable for reading from and optionally writing to memory cards, such as a Sony ® Memory Stick ® card, or alternatively legacy memory cards such as those used by the Sony ® Playstation 2 ® entertainment device. Such a reader may be integral to the PED or may connect to the bus 130 via a USB connection.
b) A universal media disk (UMD) reader 170 or other optical disk reader (such as a DVD or Blu-Ray® disk reader), for accessing media and/or game content stored thereon. Such a reader may be removably connectable to the bus 130 via a USB or proprietary connection.
c) A magnetometer 410 for determining compass direction (i.e. the current absolute orientation of the device), mounted integral to the PED either on the bus 130 or as part of the motion input unit 400.
d) A third generation (3G) or other mobile telephony module 150. in an embodiment, the module and aerial are integral to the PED, and optionally the aerial is shared with or otherwise coupled electromagnetically with other wireless units in the device for the purpose of transmission and reception. Alternatively the module may be removably connectable to the PED, for example via USB port or a Personal Computer Memory Card International Association (PCMCIA) slot.
e) A hard disk drive (HDD) 180 integral to the PED, providing bulk storage for audio / video media, downloaded games, and the like.
f) A GPS receiver 420. Again the GPS receiver may share an aerial with one or more other wireless units (such as WiFi) within the PED or may use its own aerial. Map information, where used, may be stored locally at the receiver, or in flash RAM of the PED, or on an HDD of the PED.
g) A video camera 240, typically comprising a charge coupled device (CCD) optical sensor and suitable optics for imaging onto the CCD. The resolution of the CCD may for example be 640x480 pixels, but may be any suitable resolution, such as for example 1920x1080 pixels (full HD). In an embodiment the video camera is integral to the PED, but alternatively may be removably connectable to the bus 130 via a USB or proprietary connection. An embodiment of the PED comprises two such video cameras 240, forming a stereoscopic pair.

In operation, the CPU accesses an operating system that is resident for example on a ROM, flash RAM or a hard disk. The operating system co-ordinates operation of the various functions of the PED and presents a user interface to a user of the device. The user interface will typically comprise graphical outputs via the display and touch based inputs, but may also include audio outputs and/or motion-based inputs.

The touch based inputs to the PED are peculiar to the arrangement of a display on the front of the PED and a correspondingly positioned touch sensitive surface (or 'panel') on the rear of the PED. This allows the user to treat the rear panel as a proxy for the display (in other words, address actions and inputs to the rear touch panel as if to the display, and/or point to the rear panel in order to point to the display). Thus for example, the user can point to icons or other displayed features from apparently underneath the display by touching the rear touch panel at the corresponding position.

It will be appreciated that unlike a laptop touch panel, the rear touch panel has a substantially 1:1 scale relationship with the screen, thereby not just enabling motion of a mouse pointer on screen that corresponds to motion of touch on the panel (for example), but furthermore also enabling direct placement of such a mouse on the screen at the position corresponding to the touch on the panel, because as noted above the panel can be understood to represent the screen (i.e. act as a proxy).

Because of the relative orientation of the display and the rear touch panel, left-to-right mapping across the rear touch panel is therefore reversed to correspond to the appropriate position on the display. Optionally this reversal is switchable depending on the orientation of the device as detected by the motion input unit, and/or according to what peripheral devices are connected; for example if the PED were connected to a television and then held display-down for use, the left-to-right mapping of the touch panel input may not be reversed.

Use of the rear touch panel as a proxy for the display advantageously allows interaction with the graphical output of the device without the user's hand or fingers obscuring the display or marking the display window.

In addition, the subjective experience of controlling the displayed interface from behind or underneath the screen allows for new modes of user interaction; for example selection, highlighting or magnification of a screen element may be achieved by a user pushing the element 'toward' them (i.e. with finger pressure on the rear panel) from behind the device. For a capacitance based touch panel, an increase in pressure on the rear panel (i.e. a push) can be detected by a flattening of the user's finger, which results in a larger covered area and hence more points of intersection in the panel having reduced capacitance. Conversely a reduction in pressure reduces the number of intersection points where touch is detected.

In conjunction with a similar but transparent front touch sensitive surface overlaid on the display, further modes of interaction become possible. For example, objects may be selected by being pinched between thumb and forefinger, with the thumb and forefinger touching the front and back touch panels respectively. The object may then be moved around, and, for example, activated by using a squeezing action between thumb and forefinger.

Further modes of interaction rely on the correspondence between position and / or motion of the user's fingers on the two touch panels. For example in a video playback application, stroking a finger across only the top touch panel may be interpreted as a fast-forward or rewind command (depending on direction), whilst a pinch hold followed by corresponding movement left or right of both fingers may be interpreted as selection of a specific point in playback (i.e. where the total playback time is scaled to the width of the touch panels). By contrast, however, a pinch hold followed by both fingers moving in opposite directions to each other may be interpreted as a twisting action, and adjusts a virtual volume dial. A similar grammar of interaction could be used for example for document or e-book navigation, with scrolling, page selection and zoom replacing the above playback functions.

In an embodiment of the present invention, the device to be controlled (for example the PED) comprises at least one touch sensitive surface, or if it does not have a touch sensitive surface (or the form factor of the device means that its touch sensitive surface cannot be touched when it is in the user's pocket; for example in a so-called clam-shell design) then it comprises at least one accelerometer.

Optionally it can comprise both a touch sensitive surface and at least one accelerometer, and alternatively or in addition optionally it can comprise a second touch sensitive surface on a reverse side of the device. Each of these two options advantageously mitigates the need for a single touch screen to be facing outwards in the user's pocket.

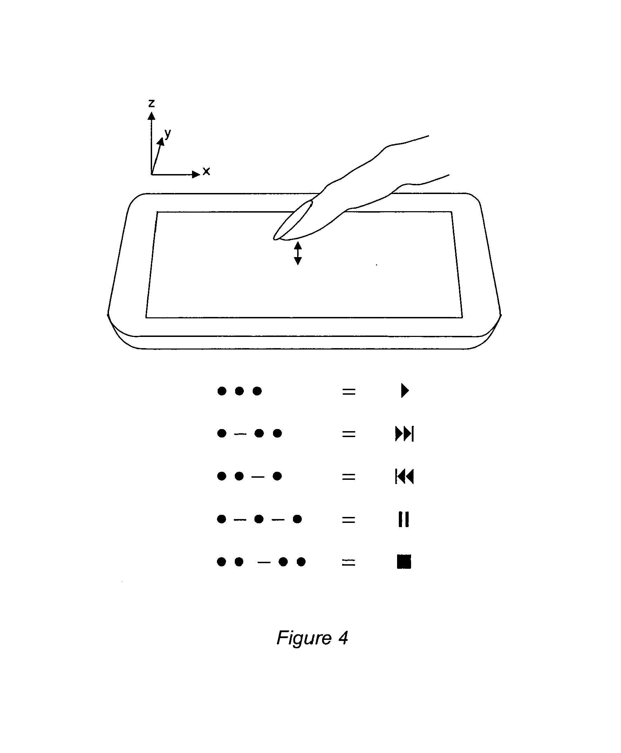

Referring now to Figure 4, in an embodiment of the present invention the device detects rhythms of taps via a touch sensitive surface. In this case, typically the user's finger, fingers or a part of their hand tap on the material of the pocket or sleeve that the device is in. This is registered as a touch by the device, either because the material itself contacts the surface, or because the user's hand is close enough (through the material) to interact with the capacitance at the touch sensitive surface's intersections. It will be appreciated that other touch sensitive surfaces (such as piezoelectric and resistance-based surfaces) respond directly to pressure and so will also work when tapped through a layer of material such as clothing.

References to 'taps' and tapping' encompass any short duration physical contact with the device that is detectable by the device and suitable for expressing a rhythm, whether that is a tap, a pat, a stroke, a knock or any similar action, either directly by the user or through an intermediary such as a stylus. "Short duration" implies a maximum length of such an incident, which may be predefined by the device or learned by the device through a training process or the detection of previous user taps. Any touch or motion incident will have an initial rising amplitude and a trailing decaying amplitude, so a known convention is applied to the definition of the duration of a tap; for example the duration is the time between levels corresponding to 1/2 of the peak amplitude of the particular incident.

Taps are detected as touch and/or motion incidents. Accordingly the CPU 100, the motion input unit 400 and the front and/or rear touch surfaces 310, 320 cooperate to provide a tapping detection arrangement.

A rhythm represents a sequence of detected taps (i.e. touch and/or motion incidents that are successfully decoded as individual taps) and is defined by the number of taps and timing information relating to one or more of: a time associated with a tap (e.g. one or more of the start time, mid-time, end time, duration); and a time associated with a pause between taps (e.g. one or more of the start time, mid-time, end time, duration). A rhythm is defined as comprising two or more taps. Rhythms are detected, decoded or recognised by the device detecting that a set of user actions corresponds (e.g. within a tolerance) to a series of taps defined by that rhythm. A rhythm has one or more device operations or commands associated with it. The device stores two or more such rhythms. Rhythms are recognised by the CPU under software control.

Where two touch sensitive surfaces are provided on opposite sides of a device, this has the advantage that it does not matter which way round the device is put into the user's pocket, but has the problem that the inward facing surface may therefore always or frequently be in effective contact with the user through their clothing. In this case the device can detect either that individual periods of touch exceed a threshold period, or that touches occur above a threshold proportion of time, or that touches are effectively random (e.g. by detecting whether the input touches fail to represent a known rhythm for more than a threshold proportion of instances), or that touches are over a wide area of the surface at a lower touch pressure than a normal operation by a finger or hand, or a combination of these factors; in any or all of these cases, the device can select to ignore input from that surface whilst waiting to receive rhythmic commands from the other surface. Thus more generally, the device can discount or disregard a touch sensitive surface from which its receives inputs that are inconsistent with deliberately input tap operations by the user, for example by exceeding a threshold input error tolerance such as those recited above. The device can impose a delay period during which it disregards inputs from a touch sensitive surface in this way, after which it re-enables inputs from that surface. For example, the delay period may be 10 seconds. After the delay period, inputs are reconsidered but if they still fail to meet the criteria described above, a further period may be applied during which inputs are disregarded, and so on. The further period(s) may be the same on each occasion (e.g. 10 seconds) or may increase in length each time a delay period is activated within a threshold time (e.g. 5 seconds) of the previous delay period finished. During the delay period, the user can cause the delay period to end by operating a user control associated with the device.

Alternatively or in addition, in an embodiment of the present invention, the device detects rhythmic taps via one or more accelerometers. Typically a device equipped with motion sensing comprises a number of orthogonally oriented accelerometers and optionally also a number of orthogonally oriented gyroscopes. However in general the accelerometer oriented to detect motion through the notional 'z' axis of the device as shown in Figure 4 (i.e. through the device from front to back, or, when placed in a pocket, from outside to inside) will be most sensitive to a tap from the user, and less sensitive to other motions such as an up-down motion due to walking. However, it will be appreciated that some or all of the other motion detectors, if available, may also be used.

Where both touch and motion input mechanisms are available, optionally they can be used to cross-validate one another so as to reduce false-positive detections. Thus, for example, whist the accelerometer may detect a series of knocks that are caused by user jogging, there will not be a corresponding series of touch incidents on the touch screen, and consequently the knocks detected by the accelerometer may be ignored even if (by chance) they correspond to a potentially recognised pattern. Conversely, the accelerometer can be used to detect either that touch incidents on the display screen are sufficiently hard (for example, differentiating normal stylus operation from patting with a hand) and/or the motion input unit can detect an orientation of the device in which touch incidents on the screen should be interpreted as rhythmic inputs (for example, detecting when the device is substantially vertical).

In an embodiment of the present invention, alternatively or in addition one or more physical buttons on the device may be pressed (for example through clothing) to execute a rhythm for detection by the device.

Input data from the touch sensor and/or the accelerometer is parsed in an attempt to detect a stored rhythm from amongst a set of two or more stored rhythms and, in response to such a detection, to instigate an associated action.

The parsing process may comprise several stages. Firstly, raw input data representing the amplitude of touch or motion detections may or may not be pre-processed, for example to detect the tap durations as defined above. Secondly, the input data may be passed directly to a recognition system such as a hidden Markov model or other known pattern matching process, or may be further processed to parameterise it. In this latter case the parameters may again be sent to a pattern matching system such as a hidden Markov model or template matcher.

Example pre-processing includes low, high or band-pass filtering, and/or binary thresholding to generate a binary version of the input data.

Example parameterisations include converting the data into a series of time stamps signalling transitions across such a binary threshold (i.e. the start and end of tapping events), or enumerating the interval period between inputs that are above the threshold (i.e. the length of pause between detected taps), or even a binary classification of whether those intervals are long or short based upon a threshold duration (i.e. whether they are long or short pauses).

In any event, the processed or unprocessed input data is then subject to pattern recognition processing, conducted by the CPU 100. Known pattern recognition techniques include hidden Markov modelling and template matching, although the skilled person will appreciate that any suitable pattern recognition system may be used.

Referring again to Figure 4, example patterns that may be recognised in this manner include two, three or more tap rhythms such as • • • and • - • and • • - • and • - • - •and • • - • •, where a '•' denotes a tap, a space between taps denotes a short pause (i.e. an interval between taps below a threshold duration) and '-' denotes a long pause (i.e. an interval between taps exceeding a threshold duration such as 0.1 seconds). It will be appreciated that a further upper threshold duration such as 0.3 seconds can be used to define the difference between a long pause and the end of a tapping sequence. In general, the PED stores, in the RAM 110 and/or the HDD 180, a set of two or more tap patterns with associated commands for controlling the operation of the PED when each tap pattern is detected.

In a hidden Markov model, such patterns may be characterised by the state sequence arising from the two different types of pause (long or short) between taps.

Similarly in template matching, the sequence of long and short pauses may be compared to a sequence list.

Optionally, the duration of the taps themselves (i.e. how long the user's hand rests upon the device) may also be similarly classified as long and short (typically with respect to a different and shorter classification threshold than that used for the pauses) and so may also be used to define a recognisable rhythm sequence.

A set of rhythm sequences may be pre-stored on the device, and of these some or all may be pre-associated with functions of the device and their control. Again, Figure 4 illustrates an example selection of pre-stored rhythm sequences and their pre-associated functions. These are:
- • Play (start or restart replay of a media item)
- • • Skip to next track or section of a media item
- - • Skip to previous section or start of current section of a media item
- • - • Pause (i.e. pause replay of a media item)
- - • • Stop replay of a media item

In addition, in an embodiment of the present invention the device may be trained to recognise new rhythms. For example, the user may select a training mode and then tap out a new rhythm on the device. The device checks that the rhythm does not match an existing stored rhythm (and, depending on the recognition method used, optionally checks that it is sufficiently distinct from existing rhythms, for example based on whether the highest probability score generated by an existing rhythm exceeds a threshold value). If the new rhythm passes the checks used, optionally the user is asked to re-enter it one or more times to allow averaging of the tap and pause lengths, and also to provide an accurate characterisation of the rhythm.

Such a trained rhythm (or an unassigned pre-set rhythm) may then be associated, by the user operating a user interface of the device, with any desired function of the device that is supported by this method, for example a command accessible through normal use (by the user) of the user interface. For example, the device may impose restrictions so that rhythm-based commands are limited to controlling those functions built into the operating system (OS) or obtained from a specific service provider, or alternatively or in addition any command (input) or input sequence may be associated with a rhythm so as to mimic any operation of the device normally possible by the user, in the form of a macro operation. (A macro operation represents a sequence of successive operations or user inputs to be applied to a data processing device as an abbreviated single command or shorter sequence of commands. In the present context, a successfully decoded tap rhythm may be considered as a composite single command which in turn can instigate either a macro operation as just defined, or a single respective operation of the device).

Thus the user may specify a rhythm for a function as simple as activating a so-called silent mode (whereby all audible notifications of the device such as a ring tone are temporarily disabled) when joining a meeting. In another example, a rhythm can initiate a function as complex as sending a text (short message service or SMS) message or an email message to a preset recipient, for example saying the user will be late home. The selection of rhythms and their associated functions depends on the user's preferences and the capabilities of the device.

It will be appreciated that pre-stored and newly recorded rhythms and their associated command or commands may be stored, for example, in an associative lookup table in RAM (e.g. flash RAM) or on a hard disk of the device. In the case that some tapping sequences are interpreted differently depending on the current operation of the device, the lookup table can comprise a condition on associating corresponding to an internal representation of the mode of the device accessible by the CPU. Where a condition is absent or a universal condition is given, then the tapping sequence is not context sensitive.

The following are examples of ways in which tap rhythms, whether pre-stored or generated by the user, may be recorded in the device's memory for use by the CPU 100 in parsing a currently detected tap sequence. In this regard, the CPU and the device's memory cooperate to provide a rhythm association arrangement which associates a recognised rhythm with one or more commands of the device, and a control arrangement to initiate the associated one or more commands. (a) simple binary sequence: 1 = tap, 0 = pause, 00 = end of sequence

e.g. 1011000 Command = Skip to next section With a simple binary sequence of this type, the storage requirements for the tap sequences and associated commands are very low, but there is little or no flexibility in accommodating different tap or pause lengths. The tap or pause lengths are either predetermined (i.e. set by the device) or learned through a user training process and then applied, as a single set of parameters, to all detected rhythms.

### (b) time based recording

Here, the start time of each tap can be stored, for example in seconds (as used in the schematic example below) or in respect of an internal machine clock. The start of the first tap in a sequence is assumed to be at time=zero, and so details of the first tap need not be stored. A short "end of sequence" marker is also provided.
e.g. tap_2_start_time = 0.2
tap_3_start_time = 0.3
tap_4_start_time = 0.4
end_of_sequence
command = Link to Macro macro_name
(where macro_name is an internal machine variable name given to a set of commands associated with a particular macro)

### (c) time based recording with tap lengths

This is similar to example (b) above, but includes the length of each tap. Indirectly, this defines the length of the pauses between the taps, so at a technical level this is equivalent to defining the start of each tap plus the pause length, or the start and end of each pause, and so on. As before, the start of tap 1 is assumed to be at time zero, but note that it is appropriate to store the length of tap 1.
e.g. tap_1_length = 0.05
tap_2_start_time = 0.2
tap_2_length = 0.05
tap_3_start_time = 0.3
tap_3_length = 0.05
tap_4_start_time = 0.5
tap_4_length = 0.05
end_of_sequence
command = Link to Macro macro_name

### (d) time based recording with tolerances

This is similar to example (b) or example (c) above. For simplicity, an example relating to example (b) is shown. A tolerance is associated with each time period specified by the rhythm. Such tolerances may be predetermined, or may be generated by detecting the variation between multiple examples of a sequence provided by a user when a sequence is first recorded, and/or may be learned by the device over time by assessing the variability of tap lengths of successfully decoded sequences.
e.g.

| | |
|---|---|
| tap_2_start_time = 0.2 | tolerance = +0.02 |
| tap_3_start_time = 0.3 | tolerance = ±0.02 |
| tap_4_start_time = 0.4 | tolerance = ±0.03 |
| end_of_sequence | |
| command = Link to Macro macro_name | |

### (e) Any of (a) to (d) with context definition

Here, the storage of the tap sequences is as defined above, but the command line can be more complex. A test is applied to detect whether a current device mode is a particular mode, and if so a certain macro or other command relating to that device mode is initiated. A default condition (i.e. if the device is in none of the defined modes) can be to exit without initiating a command (as in the example below) or to initiate a default command. Considering the command line alone (i.e. the remainder is similar to the formats set out above, an example is:
command = If current_mode = mode_A, initiate macro_command_A
Else if current_mode = mode_B, initiate macro_command_B
Else exit

In operation, the CPU 100 detects a first tap. The CPU achieves this by detecting a touch and/or a motion of the device of at least a threshold magnitude and within a defined range of temporal lengths (the range either being predefined or learned as described above). In order to achieve this, the CPU detects the start of a tap incident and records the time (e.g. according to an internal machine clock). That start time is used to detect whether the current tap incident lies within the range of temporal lengths to be considered as a tap to be decoded. If so, it also acts as the start time of a detected sequence. For this reason, a single tap alone cannot form a detected sequence - each of the two or more stored sequences has to have at least two taps. In practice, this could allow one sequence of two taps, plus other sequences of three or more taps.

Assuming a first tap is successfully detected, the CPU detects the rhythm nearest to (i.e. most likely to correspond to) a current set of taps carried out by the user, from amongst the set of predefined or learned rhythms stored by the device. The CPU detects whether the detected tap incidents are sufficiently close to a stored rhythm to allow a successful detection. If not, then either (a) the current sequence is discarded in its entirety and the CPU waits for a clear pause (of at least a threshold length such as 0.5 seconds) before attempting to decode another sequence, or (b) the CPU discards the first detected tap incident, considers the second detected tap incident as a new first tap incident and attempts to decode a sequence on the basis of those taps detected starting with the new first tap incident.

The CPU looks up a recognised tapping rhythm sequence in the stored set of rhythms, find the associated input command or input sequence, and initiates that input command or sequence on the device. Equivalently, the CPU may enact a shortcut available to it - for example, the CPU may not have to replicate navigation of a menu tree in order to activate a function selected by the user via such a menu tree on the conventional touch-screen interface. Thus more generally the CPU may use just those commands and inputs necessary to achieve an equivalent result to that achieved by the user via the conventional user interface.

In embodiments of the invention, the device can be set so as always to initiate an additional further command in response to the successful detection of a rhythm - that is to say, an extra command as well as the one defined to correspond to that rhythm. An example of such an extra command is the generation of a reply or acknowledgement signal. For example, the device could make a sound (such as a short bleep tone) to indicate that it has successfully decoded a rhythm. Another example is that the device could vibrate (using a vibration element, not shown). This second example is preferred, as it is relatively silent in operation. The acknowledgement vibration is preferably set so as to occur a preset time after the last tap of a sequence. The preset time allows sufficient time for the CPU to complete its operations to decode the sequence, and time for the user to return his hand to the device after making the last tap of the sequence. An example of a suitable present time is 1 second.

In embodiments of the present invention, various further options may be considered. One option is that rhythm input detection may be activated by use of a light sensor built into the device (not shown), which detects when the device is placed in a pocket or covering. Further optionally the light sensor may be part of a built-in camera mechanism, such as an exposure meter or all or part of the CCD.

Another option is that where one or more accelerometers are used, an adaptive filter is applied that cancels out any long-period recurring input signal, such as that caused by walking.

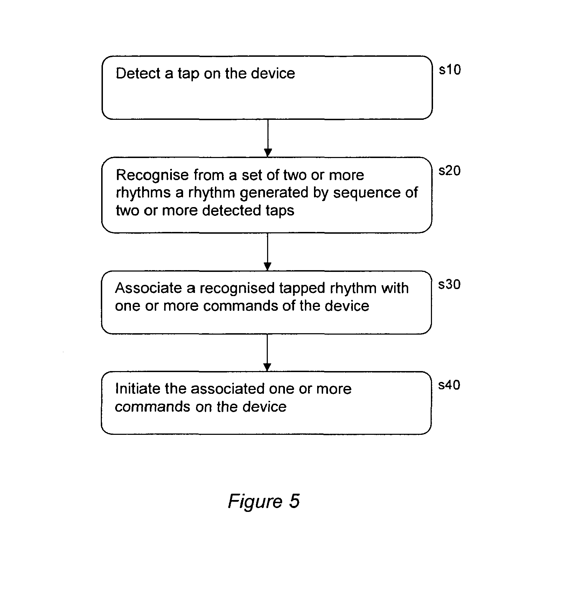

Referring now to Figure 5, a method of controlling a portable electronic device comprises:
in a first step (s10), detecting a tap on the device;
in a second step (s20), recognising from a set of two or more rhythms a rhythm generated by a respective sequence of two or more detected taps;
in a third step (s30), associating a recognised tapped rhythm with one or more commands of the device; and
in a fourth step (s40), initiating the associated one or more commands on the device.

It will be apparent to a person skilled in the art that variations in the above method corresponding to operation of the various embodiments of the apparatus as described and claimed herein are considered within the scope of the present invention, including but not limited to:
i. detecting the tap with one or more accelerometers;
ii. detecting the tap with a touch sensitive surface
iii. optionally, with one of two touch sensitive surfaces located on opposite sides of the device
iv. in which case, if one of the surfaces frequently or randomly detects contact because it is lying against the user, this is detected and that surface is then ignored;
v. recognising the sequence of taps based upon classifications of the pause length between taps (e.g. long and short pauses)
vi. optionally, also using tap contact lengths as discriminatory information;
vii. using a hidden Markov model or a template matcher to recognise the tapping sequence;
viii. allowing the user to associate either a recorded or pre-set tapping sequence with a behaviour (e.g. by recording one or more user inputs as a macro)
ix. in this case, the device may simply record operational commands (i.e. commands that control actual function of the device or provide input to such functions, but not the navigation commands used to access such functions via the normal user interface);
x. making an association between a tapping rhythm sequence and one or more commands conditional on the state of the device, so that in use a tapped input will only execute the associated commands if the device is in a certain state or operation
xi. hence the same rhythm may have multiple entries in the associative lookup table, with each entry having its own conditionally applied set of commands;
xii. detecting whether the device is likely to be in a pocket, for example by use of a light sensor
xiii. in which case the light sensor may be part of a built-in camera of the device.

Finally, it will be appreciated that the methods disclosed herein may be carried out on hardware suitably adapted as applicable by software instruction or by the inclusion or substitution of dedicated hardware.

Thus the required adaptation to existing parts of a device may be implemented in the form of a computer program product or similar object of manufacture comprising processor implementable instructions stored on a data carrier such as a floppy disk, optical disk, hard disk, PROM, RAM, flash memory or any combination of these or other storage media, or transmitted via data signals on a network such as an Ethernet, a wireless network, the Internet, or any combination of these of other networks, or realised in hardware as an ASIC (application specific integrated circuit) or an FPGA (field programmable gate array) or other configurable circuit suitable to use in adapting the device.

## Claims

1. A portable electronic device, comprising
a tapping detection means;
a rhythm recognition means arranged in operation to recognise from a set of two or more rhythms a rhythm associated with a respective sequence of two or more detected taps;
a rhythm association means arranged in operation to associate a recognised rhythm with one or more commands of the device; and
a control means operable to initiate the associated one or more commands.

2. A portable electronic device according to claim 1, in which the tapping detection means comprises an accelerometer.

3. A portable electronic device according to claim 1, in which the tapping detection means comprises a touch sensitive surface.

4. A portable electronic device according to claim 3, in which the tapping detection means further comprises a second touch sensitive surface placed on a side of the device substantially opposite the first mentioned touch sensitive surface.

5. A portable electronic device according to claim 4, in which the device is operable to disregard inputs from a touch sensitive surface from which the device receives inputs which are inconsistent with deliberately input tap operations by the user.

6. A portable electronic device according to any one of the preceding claims, in which the rhythm recognition means is operable to recognise a rhythm based upon a detection of pause lengths between taps.

7. A portable electronic device according to any one of the preceding claims, in which the rhythm recognition means comprises one or more selected from the list consisting of:
i. a hidden Markov model; and
ii. a template matcher.

8. A portable electronic device according to any one of the preceding claims, in which a user interface is operable by a user to associate a tapped rhythm with a one or more commands accessible through normal use of the user interface.

9. A portable electronic device according to any one of the preceding claims, in which:
the rhythm association means is operable to associate a recognised rhythm with a set of two or more commands; and
the control means is operable to initiate one or more commands selected from the set in dependence upon the operating state of the device at the time that the rhythm was input by a user.

10. A method of controlling a portable electronic device, comprising the steps of:
detecting a tap on the device;
recognising, from a set of two or more rhythms, a rhythm generated by a respective sequence of two or more detected taps;
associating a recognised rhythm with one or more commands of the device; and
initiating the associated one or more commands on the device.

11. A method according to claim 10, in which the step of detecting a tap on the device comprises one or more selected from the list consisting of:
i. detecting an input from a touch sensitive surface; and
ii. detecting an input from an accelerometer.

12. A method according to claim 10 or claim 11, in which the step of recognising a rhythm generated by sequence of two or more detected taps comprises the step of classifying the length of one or more pauses between taps.

13. A method according to any one of claims 10 to 12, comprising the step of associating a recognised rhythm with one or more commands accessible through normal use of the user interface.

14. A method according to any one of claims 10 to 13, in which the associating and initiating steps comprise:
associating a recognised rhythm with a set of two or more commands; and
initiating one or more commands selected from the set in dependence upon the operating state of the device at the time that the rhythm was input by a user.

15. A computer program for implementing any one of claims 10 to 14.
